# EUROPÄISCHE PATENTSCHRIFT

(11) **EP 1 862 681 B1**
(45) Veröffentlichungstag und Bekanntmachung des Hinweises auf die Patenterteilung: **08.04.2009**
(21) Anmeldenummer: 07010719.8
(22) Anmeldetag: 30.05.2007
(51) Int. Cl.: F16C 13/00, F16C 33/66

(54) **Lauf- und Spannrolle für Transportbänder zur Verwendung bei Bandförderern von Rotationsfalzanlagen**
Roller or tension roll for a conveyor belt in the conveying section of a rotary folder
Rouleau ou rouleau de tension d'une bande de transport d'une plieuse rotative

(30) Priorität: 02.06.2006 DE 202006008775 U
(43) Veröffentlichungstag der Anmeldung: 05.12.2007
(73) Patentinhaber: Aschenbrenner, Martin, 85462 Eitting (DE)
(72) Erfinder: Aschenbrenner, Martin, 85462 Eitting (DE)
(74) Vertreter: Ruschke, Hans Edvard

(56) Entgegenhaltungen:
- EP-A- 0 432 301
- DE-U1-0202005 017 85
- US-A- 2 885 247
- US-A- 4 408 808
- US-A- 6 017 152

## Beschreibung

Die vorliegende Erfindung betrifft austauschbare Lauf- und Spannrollen für Transportbänder, wie sie im Oberbegriff des Anspruches 1 angesprochen sind. Derartige Bandrollen sind aus dem Gebrauchsmuster 20207421.8 des Anmelders vom 10.05.2002 bekannt, sowie aus den DE-U-20 2005 017850.

Die im vorgenannten Stand der Technik dargestellten Bandrollen haben sich trotz der in der Gebrauchsmusterschrift beschriebenen Bemühungen um die Verbesserung derselben im Dauereinsatz als nicht wirklich dicht erwiesen, und zwar sowohl im Hinblick auf von außen eindringendem Staub als auch im Hinblick auf von innen nach außen austretendem Schmiermittel. Letzteres erweist sich vor allem in der Papier- und Druckindustrie als schwerwiegender Mangel, weil dadurch verursachte Verunreinigungen auf dem verarbeiteten Papier / Produkt für den Kunden unter keinen Umständen akzeptabel sind.

Hiernach ist es die der vorliegenden Erfindung zugrunde liegende Aufgabe, die bekannten austauschbaren Bandrollen dadurch weiter zu verbessern, dass die Dichtigkeit der Lageranordnung weiter entscheidend verbessert wird, ohne dass deshalb eine wesentliche Verteuerung in Kauf zu nehmen wäre. Zugleich sollen die Bandrollen derart ausgestaltet sein, dass sie leicht demontierbar sind und somit wiederaufbereitet bzw. repariert werden können, um einzelne Bandrollen nach einer werkstattmäßigen Überholung wieder verwenden zu können.

In diesem Zusammenhang ist zu bedenken, dass große Druckmaschinen oder Rotationsfalzanlagen und dergleichen sehr viele solcher Bandrollen benötigen, die - trotz moderner Fertigungsmethoden und höchster Materialqualität - selbstverständlich immer nur eine begrenzte Lebensdauer haben.

Die Lösung des voranstehend aufgezeigten Problems wird nach der vorliegenden Erfindung durch die Merkmalskombination nach Schutzanspruch 1 erreicht. Im Dauertest solcher neuartiger Bandrollen haben diese sich trotz der überraschend einfachen Konstruktion als gegenüber herkömmlichen Bandrollen deutlich überlegen erwiesen, und zwar insbesondere im Hinblick auf die Dichtigkeit der Lagerung in beiden Richtungen (sowohl gegenüber dem Eintritt von Staub ins Innere als auch gegenüber dem Austritt von Schmiermittel nach außen).

Bevorzugte Ausgestaltungen des erfinderischen Konzeptes sind in den Unteransprüchen definiert.

Ein besonders bevorzugtes konkretes Ausführungsbeispiel der Erfindung ist in den beigefügten Zeichnungen dargestellt. Darin ist die
Fig.1 1 eine Schnittansicht der erfindungsgemäßen Lauf- und Spannrolle und
Fig. 2 eine Explosionsansicht des gleichen Lagers zum Zwecke der besseren Sichtbarkeit bzw. des besseren Verständnisses.

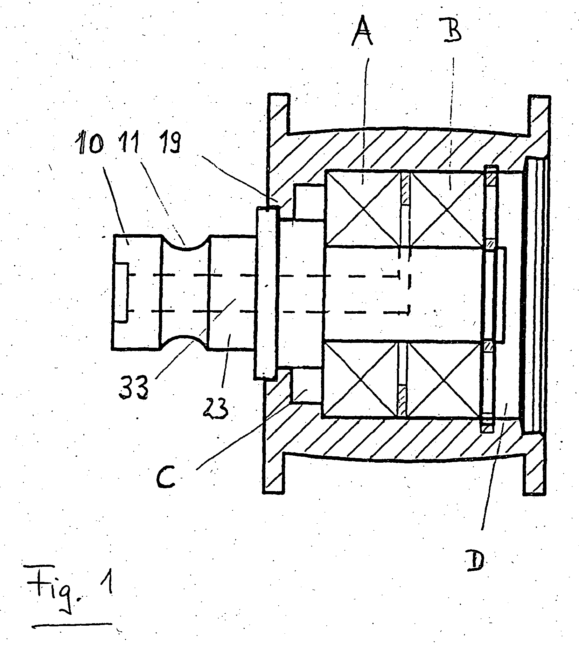

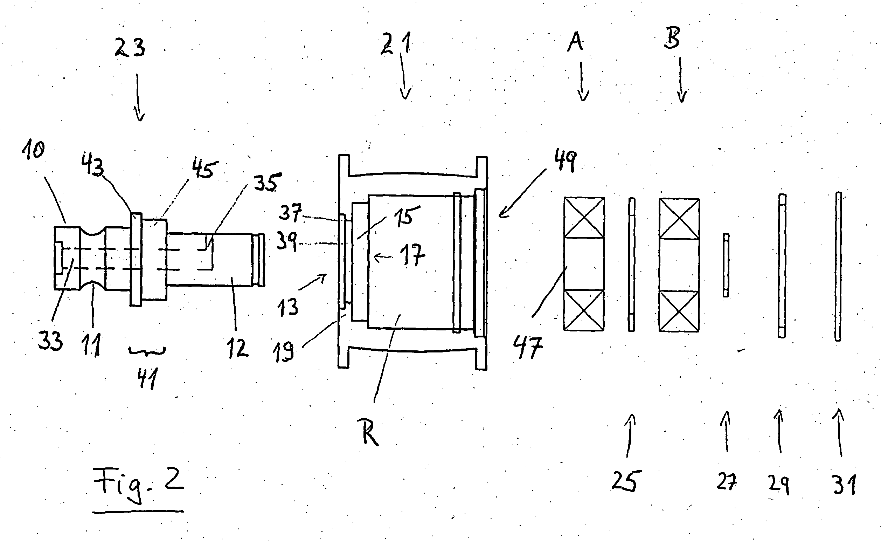

Die Fig. 1 bzw. 2 zeigt die Steckachse 23 mit einem Mittelabschnitt 41 aus zwei Abschnitten/Absätzen 43 und 45 von jeweils unterschiedlichem Durchmesser und unterschiedlicher axialer Länge: Der in den Figuren weiter links liegende Absatz 43 ist etwas größer im Durchmesser und etwas kürzer in der axialen Länge als der Absatz 45: Beide zusammen passen genau in den entsprechend gestalteten gestuften Einstich 13 in der Stirnwandung 19, die am linken (proximalen) Ende des hülsenförmigen Rollenkörpers 21 radial einwärts vorspringt und neben den Absätzen 37 und 39 auch noch den vom Innenraum R ausgehenden Einstich 15 aufnimmt, der im endgültigen Zusammenbau der Fig. 1 die Depotkammer C ausbildet. Es ist grundsätzlich möglich, mehr als zwei Absätze 43, 45 bzw. 37, 39 vorzusehen, hat sich aber in der Praxis als nicht notwendig erwiesen, weil die zwei Absätze bereits für sich wie eine Labyrinth-Dichtung wirken.

Die Fig. 2 zeigt die Bandrolle im zusammengebauten Zustand: Zwei Rillenkugellager A bzw. B haben einen Innendurchmesser 47 entsprechend dem Außendurchmesser des distalen Endes 12 der Steckachse 23 und einen Außendurchmesser entsprechend dem Innendurchmesser des Rollenkörpers 21, d.h. letzterer ist auf der Steckachse gelagert. Die Distanzscheibe 25 bestimmt den axialen Abstand der Rillenkugellager A bzw. B, die jeweils innen offen und außen gedeckelt sind. Die beiden Rillenkugellager sind durch einen Seegerring 27 am distalen Ende der Steckachse 23 austauschbar festgelegt. Entsprechend sind die Kugellager auch am Innendurchmesser des Rollenkörpers 21 fixiert, und zwar durch den Seegerring 29, der einwärts vom distalen Ende des hülsenförmigen Rollenkörpers 21 an dessen Innendurchmesser angreift und somit die Depotkammer D für Kugellagerfett definiert, und zwar axial einwärts von dem Deckel 31 in Gestalt einer dicht passend in einen Einstich 49 eingesetzten Kunststoff-Abdeckung. Dieser Einstich 49 in der distalen Stirnfläche des Rollenkörpers 21 ist zur Mündung hin abgeschrägt, um jegliche Staubablagerung in diesem Bereich nach Möglichkeit zu vermeiden.

Um bei Bedarf Kugellagerfett problemlos in den Bereich zwischen den Kugellagern einführen zu können, ist die Steckachse mit einer zentralen Längsbohrung versehen, die eine Schmiermittelbohrung 33 ausbildet und auf der Höhe des vorgenannten Zwischenbereiches in eine radiale Querbohrung 35 übergeht.

Das proximale Ende 10 der Steckachse 23 ist in eine entsprechend gestaltete Lagerbuchse einer verschwenkbaren Vierkanthalterung, z. B. eines Bandförderers oder dergl., einsetzbar. Dort wird die Steckachse durch einen nicht näher dargestellten zylinderförmigen Spann- oder Querstift verriegelt, der in eine Querbohrung in der Vierkanthalterung eingesetzt wird, um damit in die umlaufende kreissegmentartige Hohlkehle 11 der Steckachse 23 einzugreifen und letztere dadurch zu fixieren.

### Bezugszeichenliste

- 10: Proximales Ende von 23
- 11: Hohlkehle in 10 für Zylinderspannstift
- 12: Distales Ende von 23
- 13: Einstich, gestuft
- 15: Einstich von Innen
- 17: Durchtrittsöffnung in 14
- 19: Stirnwandung von 21
- 21: Rollenkörper
- 23: Steckachse
- 25: Distanzscheibe
- 27: Seegerring Nr. 1
- 29: Seegerring Nr. 2
- 31: Kunststoff-Abdeckung/Deckel
- 33: Schmiermittelbohrung
- 35: Querbohrung zu 33
- 37: Abschnitt 1 von 13
- 39: Abschnitt 2 von 13
- 41: Mittelabschnitt von 23
- 43: Absatz 1 von 41
- 45: Absatz 2 von 41
- 47: Innendurchmesser von A, B
- 49: Einstich

- A -: Rillenkugellager
- B -: Rillenkugellager
- C -: Depotkammer
- D -: Depotkammer
- R -: Innenraum Rollenkörper

## Patentansprüche

1. Lauf- und Spannrolle für Transportbänder zur Verwendung bei Bandförderern von Rotationsfalzanlagen für Druckmaschinen und bei Transport- und Fördersystemen etc., mit:
- einer zentralen, einseitig vorstehenden/gelagerten Steckachse (23),
- einem umlaufenden, im wesentlichen hülsenförmigen Rollenkörper (21),
- auf der Steckachse (23) aufsitzenden, zwischen Steckachse und Innenumfang des Rollenkörpers vorgesehenen Norm-Rillenkugellagern (A, B), die auswechselbar sind,
- sowie mit je einer Staubabdeckung (31) auf beiden offenen Stirnseiten des Rollenkörpers (21),
**dadurch gekennzeichnet, dass**
der umlaufende hülsenförmige Rollenkörper (21) an seinem zur Steckachse (23) benachbarten proximalen Ende mit einer radial einwärts vorspringenden massiven Stirnwandung (19) versehen ist, in der zentral die axiale Durchtrittsöffnung (17) für die feststehende Steckachse vorgesehen ist,
dass die zentrale Durchtrittsöffnung (17) der Stirnwandung (19) als von deren Außenfläche abgehender gestufter Einstich (13) mit mindestens zwei annähernd gleich breiten Abschnitten (37, 39) mit unterschiedlichen Innendurchmessern ausgebildet ist,
und dass die Steckachse (23) mit einem verdickten Mittelabschnitt mit entsprechend zu dem gestuften Einstich (13) dicht passenden, axial zueinander versetzten benachbarten Absätzen (43, 45) versehen ist derart, dass der gestufte Einstich zusammen mit den mindestens zwei zueinander versetzten Absätzen des verdickten Mittelteils (41) der Steckachse (23) eine gegenüber Staub und Fett dichte Achsdurchführung an der proximalen massiven Stirnwandung (19) des Rollenkörpers (21) ausbildet.

2. Lauf- und Spannrolle nach Anspruch 1, **dadurch gekennzeichnet, dass** die radial einwärts vorspringende massive Stirnwandung (19) des Rollenkörpers (21) einen vom Innenraum (R) ausgehenden, konzentrisch zur Mittelachse angeordneten rotationssymmetrischen Einstich (15) zur Ausbildung einer Depot-Kammer (C) für überschüssiges Kugellagerfett für das benachbarte Kugellager (A) aufweist.

3. Lauf- und Spannrolle nach Anspruch 1, **dadurch gekennzeichnet, dass** der Rollenkörpers (21) an dem von der Steckachse (23) entfernten distalen Ende einen axialen Überstand zur Ausbildung einer Depot-Kammer (D) für überschüssiges Kugellagerfett für das benachbarte Kugellager (B) aufweist.

4. Lauf- und Spannrolle nach einem der voranstehenden Ansprüche, **dadurch gekennzeichnet, dass** der hohlzylindrische Innenraum (R) des Rollenkörpers (21) an dem von der Steckachse (23) entfernten bzw. distalen Ende durch einen eingepressten massiven Deckel, vorzugsweise aus Kunststoff, Fett- bzw. Staub-dicht abgesperrt ist.

5. Lauf- und Spannrolle nach einem der voranstehenden Ansprüche, **dadurch gekennzeichnet, dass** die Steckachse (23) eine von ihrer außen liegenden Stirnfläche ausgehende zentrale Schmiermittelbohrung (33) aufweist, die mit einer endständigen, radial abgehenden Querbohrung (35) versehen ist, die zentral in den Spalt zwischen den Rilenkugellagern (A, B) im Innenraum (R) des Rollenkörpers (21) endet.

6. Lauf- und Spannrolle nach Anspruch 5, **dadurch gekennzeichnet, dass** am Eingang zur Schmiermittelbohrung (33) ein Schmiermittelventil / -nippel in Gestalt eines federbelasteten Kugelrückschlagventils vorgesehen ist.

## Claims

1. Idling and tensioning roller for conveyor belts in belt-type conveyors used in rotary folding plants for printing presses and in transport and conveying systems, etc., comprising:
- a central axle (23) mounted for rotation at one end and projecting at the other end;
- a revolving, substantially sleeve-shaped roller body (21);
- standard grooved ball bearings (A, B) mounted on axle (23) between said axle and the inner diameter of the roller body, said bearings being re-placeable; and
- a dust seal (31) on either open end face of roller body (21);
**characterized in that**
the revolving sleeve-shaped roller body (21) has at its proximal end adjacent axle (23) a radially inwardly projecting solid end wall (19) having centrally therein the axial passage (17) through which the stationary axle extends;
said central passage (17) in end wall (19) is in the form of a stepped aperture (13) starting at the outer surface and having at least two sections (37, 39) of approximately the same width and of different inner diameters; and **in that**
said axle (23) has an increased diameter mid-section with axially spaced neighbouring shoulders (43, 45) conforming with and fitting said stepped aperture (13) in a sealing relationship therewith such that said stepped aperture forms, together with the at least two spaced shoulders on the increased-diameter mid-section (41) of axle (23), an axle lead-through sealed from dust and grease at the proximal solid end wall (19) of roller body (21).

2. Idling and tensioning roller as in claim 1, **characterized in that** the radially inwardly projecting solid end wall (19) of roller body (21) has therein a rotationally symmetrical incision (15) starting from inner space (R) and being concentric with the central axis for forming a depot chamber (C) to receive excess bearing grease from the adjacent ball bearing (A).

3. Idling and tensioning roller as in claim 1, **characterized in that** roller body (21) has at the distal end remote from axle (23) an axial overhang for forming a depot chamber (D) to receive excess bearing grease from the adjacent ball bearing (B).

4. Idling and tensioning roller as in any one of the preceding claims, **characterized in that** the hollow cylindrical inner space (R) of roller body (21) is sealed at the distal end remote from axle (23) against grease egress and dust ingress by means of a solid cover member pressed in place and preferably made of a plastics material.

5. Idling and tensioning roller as in any one of the preceding claims, **characterized in that** axle (23) has therein a central lubricant bore (33) extending from its external end wall and having at its opposite end a radially branching cross bore (35) terminating midway in the gap between the grooved ball bearings (A, B) in inner space (R) of roller body (21).

6. Idling and tensioning roller as in claim 5, **characterized by** a lubricant valve/nipple in the form of a spring-biased ball check valve and provided at the entrance of lubricant bore (33).

## Revendications

1. Galet de roulement et de tension pour bandes transporteuses destinées à l'utilisation sur des convoyeurs à courroie de plieuses rotatives pour presses et sur des systèmes de transport et de convoyage etc..., comprenant :
- un arbre de roue (23) central, monté/dépassant unilatéralement,
- un corps de rouleau (21) tournant, essentiellement en forme de manchon,
- des roulements radiaux à billes standard (A, B), reposant sur l'arbre de roue (23), prévus entre l'arbre de roue et le pourtour intérieur du corps de rouleau, qui sont interchangeables,
- ainsi que respectivement une couverture anti-poussières (31) sur les deux côtés frontaux ouverts du corps de rouleau (21),
**caractérisé en ce que**
- le corps de rouleau (21) tournant en forme de manchon est muni sur son extrémité proximale, voisine de l'arbre de roue (23), d'une paroi frontale massive (19) en saillie radiale vers l'intérieur, paroi dans laquelle est prévue au centre l'ouverture de passage axiale (17) pour l'arbre de roue stationnaire,
- l'ouverture de passage centrale (17) de la paroi frontale (19) est réalisée sous forme d'entaille (13) étagée, partant de la surface extérieure de cette dernière, avec au moins deux sections (37, 39), de largeur approximativement égale, avec des diamètres intérieurs différents, et
- l'arbre de roue (23) est muni d'une section centrale épaissie avec des épaulements voisins (43, 45) en déport mutuel axial, étroitement adaptés en conséquence à l'entaille (13) étagée, de telle sorte que l'entaille étagée, avec les au moins deux épaulements en déport mutuel de la partie centrale épaissie (41) de l'arbre de roue (23), réalise une traversée axiale, étanche aux poussières et aux graisses, sur la paroi frontale (19) massive proximale du corps de rouleau (21).

2. Galet de roulement et de tension suivant la revendication 1, **caractérisé en ce que** la paroi frontale massive (19), en saillie radiale vers l'intérieur, du corps de rouleau (21), présente une entaille (15) à symétrie de révolution, disposée de façon concentrique à l'axe médian et partant de l'espace intérieur (R), pour la réalisation d'un compartiment de dépôt (C) destiné à de la graisse excédentaire du roulement à billes (A) voisin.

3. Galet de roulement et de tension suivant la revendication 1, **caractérisé en ce que** le corps de rouleau (21) présente, sur l'extrémité distale distante de l'arbre de roue (23), un porte-à-faux axial pour la réalisation d'un compartiment de dépôt (D) pour de la graisse excédentaire du roulement à billes (B) voisin.

4. Galet de roulement et de tension suivant l'une des revendications précédentes, **caractérisé en ce que** l'espace intérieur cylindrique et creux (R) du corps de rouleau (21) est verrouillé sur l'extrémité distale ou distante de l'arbre de roue (23) par un couvercle massif emmanché, de préférence en matière plastique, de façon étanche aux graisses ou aux poussières.

5. Galet de roulement et de tension suivant l'une des revendications précédentes, **caractérisé en ce que** l'arbre de roue (23) présente un alésage de lubrification (33) central, partant de sa surface frontale située extérieurement, lequel alésage est muni d'un alésage transversal (35) terminal, partant dans la direction radiale, qui s'achève au centre dans la fente entre les roulements radiaux à billes (A, B) dans l'espace intérieur (R) du corps de rouleau (21).

6. Galet de roulement et de tension suivant la revendication 5, **caractérisé en ce qu'**un clapet de lubrification/raccord fileté de graissage est prévu à l'entrée de l'alésage de lubrification (33) en configuration d'une soupape anti-retour à bille chargée par ressort.
